# EUROPÄISCHE PATENTSCHRIFT

(11) **EP 2 986 999 B1**
(45) Veröffentlichungstag und Bekanntmachung des Hinweises auf die Patenterteilung: **13.03.2019**
(21) Anmeldenummer: 14718571.4
(22) Anmeldetag: 16.04.2014
(51) Int. Cl.: G01S 19/49, B60R 1/00, G01S 19/52, G07C 5/00, G01P 3/36, G01P 3/38, G01P 7/00, G06K 9/00, G06T 7/20, G07C 5/08

(54) **VERFAHREN ZUR KOMBINIERTEN BESTIMMUNG EINER GESCHWINDIGKEIT UND EINER BILDAUFNAHME AUS EINEM FAHRZEUG UND DAFÜR GEEIGNETE VORRICHTUNG**
METHOD FOR THE COMBINED DETERMINATION OF A SPEED AND AN IMAGE TAKEN FROM A VEHICLE, AND APPARATUS SUITABLE THEREFOR
PROCÉDÉ DE DÉTERMINATION COMBINÉE D'UNE VITESSE ET D'UNE PRISE DE VUE À PARTIR D'UN VÉHICULE ET DISPOSITIF APPROPRIÉ À CETTE FIN

(30) Priorität: 16.04.2013 DE 102013006519
(43) Veröffentlichungstag der Anmeldung: 24.02.2016
(73) Patentinhaber: Trajet Gmbh, 38106 Braunschweig (DE)
(72) Erfinder: HELCK, Christian, 38104 Braunschweig (DE)
(74) Vertreter: Einsel, Martin
(86) Internationale Anmeldenummer: PCT/EP2014/057759
(87) Internationale Veröffentlichungsnummer: WO 2014/170386

(56) Entgegenhaltungen:
- DE-A1-102006 020 471
- US-A- 5 416 712
- US-A1- 2009 066 488

## Beschreibung

Die Erfindung betrifft ein Verfahren zur Bestimmung einer Geschwindigkeit eines sich bewegenden Fahrzeugs, mit folgenden Schritten:
- Ermitteln von Werten einer Beschleunigung und von Werten einer Verzögerung des Fahrzeugs zu einem bestimmten Zeitpunkt mittels Beschleunigungssensoren,
- Ermitteln von Werten der Geschwindigkeit des Fahrzeugs zu einem bestimmten Zeitpunkt aus den Werten der Beschleunigung und den Werten der Verzögerung,
- Aufzeichnen der Werte der Geschwindigkeit des Fahrzeugs in einem Speichermedium,
- Aufnehmen von satellitengestützten Informationen aus dem Global Positioning System GPS für Navigationsgeräte im Fahrzeug, und
- Aufnehmen eines Bildes mittels einer Videokamera,

Die Erfindung betrifft außerdem eine Vorrichtung zur Durchführung dieses Verfahrens.

Aus mehreren Gründen heraus ist die Geschwindigkeit eines sich bewegenden Fahrzeugs interessant. So benötigt der Fahrer des Fahrzeugs die Information, um beispielsweise im Straßenverkehr die voraussichtliche Verhaltensweise seines Fahrzeugs bei Lenkbewegungen und insbesondere auch den Bremsweg besser abschätzen zu können, darüber hinaus natürlich auch zur Beachtung von Geschwindigkeitsbegrenzungen. Neben dem Fahrer des Fahrzeugs selbst kann die Geschwindigkeit aber auch für andere Benutzer interessant sein, beispielsweise in der Kraftfahrzeugindustrie bei der Entwicklung neuer Motoren und Fahrzeuge.

Es gibt verschiedene Möglichkeiten für einen Benutzer, die Geschwindigkeit eines sich bewegenden Fahrzeugs zu bestimmen. Herkömmlich wird durch den Fahrer des Fahrzeugs hierzu der Tachometer des Fahrzeuges abgelesen, der seinerseits mechanisch oder in jüngerer Zeit auch elektronisch auf die Umdrehungszahl pro Zeit der Räder des Fahrzeuges zurückgreift. Nimmt man den Umfang des Rades des Fahrzeuges als konstant und bekannt an, lässt sich aus der Umdrehungszahl pro Zeit problemlos die Fortbewegungsgeschwindigkeit des Fahrzeuges errechnen. Derartige Verfahren sind im täglichen Straßenverkehr hinreichend genau, um dem Fahrer eines Kraftfahrzeugs einen Überblick über die aktuell von ihm gefahrene Geschwindigkeit seines Fahrzeuges zu geben.

Es gibt auch verbesserte Verfahren für solche Fälle, bei denen eine präzisere Messung gewünscht wird, beispielsweise bei der Entwicklung neuer Motoren oder für kommerzielle Anwendungen. Durch Rotationssensoren und die Messung der Winkelbeschleunigung eines Rades des Kraftfahrzeugs können Ungenauigkeiten, die sich unter anderem aus der aufgrund Verschleiß, Temperaturschwankungen und Einflüssen des Drucks im Inneren des Reifens veränderlichen Umfangslänge eines Kraftfahrzeugrades ergeben, sauber ausgeglichen werden. Solche Verfahren werden beispielsweise in der WO 2007/125033 A1 und der DE 10 2006 020 471 A1 beschrieben. Beschrieben werden dabei auch Auswerteeinrichtungen und die Möglichkeit, die entsprechenden Daten an einen ortsfesten Empfänger zu übermitteln. Dies ist für kommerzielle Anwendungen gerade in den Entwicklungsabteilungen der Kraftfahrzeugindustrie von großem Interesse.

Es ist auch schon vorgeschlagen worden, zur Ermittlung der Geschwindigkeit des Kraftfahrzeuges satellitengestützte Navigationssysteme heranzuziehen, insbesondere das Global Positioning System (GPS). Ein solches Vorgehen wird etwa in der DE 101 48 667 A1 vorgeschlagen. Aus den Ortsdaten, die in diesem System aus dem Empfang der Positionsmerkmale mehrerer Satelliten gewonnen wird, lässt sich bei mehreren Messungen im zeitlichen Abstand auch ein Geschwindigkeitsvektor ermitteln. Die DE 101 48 667 A1 schlägt nun vor, diesen mittels GPS bestimmten Geschwindigkeitswert mit weiteren Geschwindigkeitswerten in Verbindung zu setzen, die beispielsweise mittels Inertialsensoren gewonnen werden, etwa durch eine Mittelwertbildung.

Der Nachteil bei der Geschwindigkeitsbestimmung durch GPS auf diese Weise ist eine erhebliche Ungenauigkeit. Zwar kann ein Ort mittels GPS etwa auf 1 oder 2 m Genauigkeit bestimmt werden, hier geht es aber um eine mehrfache Bestimmung von Orten noch dazu in kurzen Zeitabständen, sodass die inherenten Fehler der Ortsbestimmung sich mehrfach addieren und auch in der Praxis durchaus in jeweils unterschiedlichen Richtungen liegen können. Dies führt dazu, dass bei relativ kurzen Zeitabständen zur Gewinnung möglichst aktueller Geschwindigkeiten die Fehlerquoten entsprechend deutlich ansteigen.

Ein weiterer Vorschlag für eine Bestimmung der ungefähren Geschwindigkeit eines Fahrzeugs unter Benutzung von Informationen aus dem GPS und einer Koppelnavigation ist aus der US 5,416,712 A bekannt.

In einem aus der US 2009/0066488 A1 bekannten Vorschlag werden die Informationen des GPS für ein Diebstahlsicherungssystem eingesetzt.

In der EP 0 838 660 B1 wird darüber hinaus vorgeschlagen, auch vom GPS-Signal zur Verfügung gestellte Geschwindigkeitsinformationen zu nutzen und geeignet mit anderen Daten zu kombinieren. Es wird nicht näher bezeichnet, um was es sich dabei für Geschwindigkeitsinformationen im GPS-Signal handeln soll und wie diese zu verarbeiten wären.

Tatsächlich können die vom GPS-Satelliten abgesandten Signale Angaben über die aktuelle Geschwindigkeit und Bewegungsrichtung des Satelliten selbst enthalten, die dann in einer noch festzustellenden Form weiterverarbeitet werden könnten.

Aus der EP 1 007 391 B1 ist darüber hinaus der Gedanke bekannt, bei einem Einsatz von GPS-Signalen in Flugzeugen zusätzliche Maßnahmen vorzusehen, unter anderem die Fehler in den von den Satelliten ausgesandten Signalen festzustellen und entsprechend zu isolieren, um Fehlbestimmungen in der Luftfahrt möglichst ganz auszuschließen.

Da es darum geht, die Geschwindigkeit von bewegten Fahrzeugen in geeigneter Form festzuhalten, kommt auch in Betracht, den Dopplereffekt zu nutzen. Dieser Dopplereffekt entsteht dadurch, dass ein mit dem Fahrzeug bewegter GPS-Empfänger sich relativ zu den Signalen bewegt, die von den GPS-Sendern in den Satelliten abgegeben werden. Ist wie oben beschrieben in den Signalen auch eine Information darüber enthalten, mit welcher Geschwindigkeit und in welche Richtung sich der Satellit bewegt, so kann dann unter Zuhilfenahme des Dopplereffektes auch die aktuelle Geschwindigkeit des Empfängers ermittelt werden. Diese Möglichkeit ist wesentlich genauer als eine Ermittlung der Geschwindigkeit über die reine Änderung der Ortsposition.

Die empfangenen Signale müssen zu diesem Zweck auch Informationen über die entsprechende Geschwindigkeit des Satelliten enthalten, während er die Signale abgibt.

Auch bei dieser Möglichkeit, ist jedoch eine unbekannte Ungenauigkeit der Geschwindigkeitsmessung ein deutliches Problem. Die Abweichungen können sich vom Benutzer unbemerkt ändern, was die Messwerte faktisch unbrauchbar macht, da nicht ermittelt werden kann, ob ein Messwert innerhalb bestimmter Grenzen liegt.

Für das aktuelle Führen eines Kraftfahrzeugs sind diese Ungenauigkeiten weniger kritisch. Für den Fahrer spielt es keine große Rolle, ob nun sein Kraftfahrzeug sich mit 100 km/h oder mit 97 km/h vorwärtsbewegt. Während eines Beschleunigungs- oder Abbremsvorgangs ist für den Fahrer auch weniger relevant, mit welcher Geschwindigkeit er gerade aktuell fährt, solange diese Geschwindigkeit sich innerhalb eines von ihm für sinnvoll gehaltenen und zum Abbremsen oder Beschleunigen passenden Rahmens bewegt.

Anders sieht das aber aus, wenn aus diesen Geschwindigkeitswerten zu einem späteren Zeitpunkt Auswertungen gefertigt werden sollen. Dies betrifft nicht nur die Optimierung von Motoren und Fahrzeugen in der Forschung und Entwicklung, sondern auch andere Fragen. Beispielsweise können die aufgezeichneten Geschwindigkeiten zur Verkehrsüberwachung und Kontrolle verwendet werden und ihre Genauigkeit und die Höhe und Richtung eines denkbaren Messfehlers muss auch einer gerichtlichen Überprüfung im Einzelfall standhalten können.

Als weiterer Anwendungsfall ist beispielsweise in den letzten Jahren der Gedanke hinzu gekommen, in Kraftfahrzeugen entsprechende Werte aufzeichnen zu lassen, um etwa nach einem Unfall oder einem anderen Ereignis rückwirkend bestimmte Randbedingungen des Betriebes des Fahrzeuges feststellen zu können. Die herkömmlichen sogenannten "Tacho-Scheiben", die in Lastkraftwagen regelmäßig mitschreiben, ob und wie schnell ein Fahrzeug geführt wird, sind sehr ungenau und lassen lediglich das mehrstündige Fahrverhalten oder das Überschreiten beziehungsweise Nichtüberschreiten bestimmter Grenzwerte nachträglich erkennen. Für die Frage, mit welcher Geschwindigkeit sich ein Lastkraftwagen auf eine Kreuzung zubewegt hat, sind diese bisherigen Messverfahren weder gedacht noch geeignet. Gerade auch aus versicherungstechnischen Gründen zur Klärung der Schuldfrage nach Unfällen wären solche Angaben jedoch interessant, da die bisherige Situation, die sich zur Klärung überwiegend auf Zeugenaussagen oder vielleicht noch Bremsspuren auf dem Straßenbelag stützt, in streitigen Fällen vielfach unbefriedigend bleibt.

Teilweise werden Geschwindigkeiten auch in sogenannten Blackboxsystemen aufgezeichnet, die auch als Unfalldatenschreiber bezeichnet werden und gelegentlich mit einer Videoaufzeichnungstechnik verknüpft sein können. Diese Systeme messen die Geschwindigkeit der Fahrzeuges meist über Radsensoren oder lesen die Daten vom Fahrzeug Datenbus (CAN-Bus) ab, was zum Einen die Installation erschwert, zum Anderen eine Parametrierung erfordert und zum Dritten von Fahrzeugtyp zu Fahrzeugtyp variiert. Die Blackboxsysteme, die die aktuelle Geschwindigkeit ebenfalls über GPS ermitteln, kompensieren weder den zeitlichen Versatz zur Videoaufzeichnung noch wird die GPS Geschwindigkeit mit einem zweiten Verfahren in ihrer Toleranz bewertet also auf Gültigkeit geprüft. Es ergeben sich also systematische Fehler, allgemeine Messungenauigkeiten und schließlich ein fehlendes Vertrauen in die Messwerte, da selbst über die ungefähre Größe eines möglichen Messfehlers kaum Aussagen gemacht werden können.

Darüber hinaus sind derartige Videoaufnahmen bekannt, beispielsweise aus den in Polizeifahrzeugen eingesetzten Videokameras, die bei Hinterherfahrten eine Aufnahme des vorausfahrenden Fahrzeuges und dessen Fahrverhalten aufzeichnen und später wiedergeben können. Dabei ist es auch möglich, zugleich die Geschwindigkeit des Polizeifahrzeuges zu messen und aufzunehmen und über entsprechende Messgeräte auch eine Aufzeichnung der gemessenen Geschwindigkeit des vorausfahrenden Fahrzeugs vorzunehmen und den mit der Videoaufzeichnung aufgenommenen Bildaufnahmen zuzuordnen. Diese Zuordnung ist allerdings im Stand der Technik sehr unbefriedigend und ihre Genauigkeit ist aus systematischen Gründen heraus begrenzt und nicht sehr genau.

Derartige Videoaufnahmen benötigen eine endliche Zeit, um jeweils aus einer Vielzahl von Pixel ein vollständiges Bild zusammen zu setzen. Diese Gesamtzeit ist vergleichsweise kurz und beträgt mit den aktuell zur Verfügung stehenden technischen Mitteln etwa 40 Millisekunden. Die Messung der Geschwindigkeit des Polizeifahrzeugs erfolgt implizit aus dem Tachometer zugeordneten Messverfahren und die Messung der Geschwindigkeit des vorausfahrenden Fahrzeuges erfolgt indirekt, da dazu bereits die Messwerte für das nachfahrende Fahrzeug als Grundlage benötigt werden. Darüber hinaus ist auch für diese Messungen eine bestimmte Zeitspanne erforderlich und es ist dadurch sehr schwierig, bestimmte Messwerte in diesem Zusammenhang bestimmten mit der Videokamera aufgenommenen Bildern zuzuordnen, da durch das Messverfahren mehrere Vorgänge mit jeweils endlichen Zeitvorgängen vorliegen.

Darüber hinaus kann es natürlich auch sein, dass für eine der ermittelten Messungen Messfehler vorliegen, die dann aber gar nicht erkannt werden können, da es für eine solche Erkennung keine Grundlage gibt.

Wünschenswert wäre es daher, wenn Möglichkeiten zur Verfügung stehen würden, die hier eine Abhilfe schaffen können.

Aufgabe der Erfindung ist es, eine weitere Möglichkeit für Messungen und deren Aufzeichnung für Auswertungen von Fahrzeuggeschwindigkeiten zur Verfügung zu stellen.

Diese Aufgabe wird bei einem gattungsgemäßen Verfahren durch folgende Schritte gelöst:
- Ermitteln von Werten der Geschwindigkeit des Fahrzeugs zu einem bestimmten Zeitpunkt aus den aufgenommenen Informationen des GPS,
- Ermitteln einer Abweichung der Werte der aus den Daten des GPS ermittelten Geschwindigkeit und der aus den Werten der Beschleunigung ermittelten Werte der Geschwindigkeit,
- Aufnehmen des Bildes eines Bereiches vor dem Fahrzeug mittels einer Videokamera und Aufzeichnen in einem Speichermedium, und
- für den Fall, dass die Abweichung der Werte der aus den Daten der GPS ermittelten Geschwindigkeit und der Werte der aus den Werten der Beschleunigung ermittelten Geschwindigkeit zu einem bestimmten Zeitpunkt eine vorgegebene, gegebenenfalls auch variable Toleranzschwelle nicht überschreitet, Zuordnen der Werte dieser ermittelten Geschwindigkeit zu der zum gleichen bestimmten Zeitpunkt erfolgten aufgezeichneten Bildaufnahme, andernfalls Verwerfen oder entsprechendes Kennzeichnen der ermittelten Werte und Bilder.

Bei einer gattungsgemäßen Vorrichtung wird die Aufgabe mittels der Erfindung dadurch gelöst, dass
- die Datenverarbeitungseinrichtung dazu vorgesehen ist, die Werte der Geschwindigkeit des Fahrzeugs zu einem bestimmten Zeitpunkt aus den aufgenommenen Daten des GPS zu ermitteln,
- die Datenverarbeitungseinrichtung dazu vorgesehen ist, die Abweichung der Werte der aus den Informationen des GPS ermittelten Geschwindigkeit und den Werten der aus den Werten der Beschleunigung ermittelten Geschwindigkeit zu ermitteln und zu bewerten,
- die Videokamera an das Speichermedium angeschlossen ist, und
- die Datenverarbeitungseinrichtung so aufgebaut ist, dass für den Fall, dass die Abweichung der Werte der aus den Informationen des GPS ermittelten Geschwindigkeit und der Werte der aus den Werten der Beschleunigung ermittelten Geschwindigkeit zu einem bestimmten Zeitpunkt eine vorgegebene, gegebenenfalls auch variable Toleranzschwelle nicht überschreitet, der Werte dieser Geschwindigkeit zu der zum gleichen Zeitpunkt erfolgten aufgezeichneten Bildaufnahme zugeordnet wird, andernfalls die ermittelten Werte und Bilder verworfen oder entsprechend gekennzeichnet werden.

Es entsteht somit ein Verfahren und eine Vorrichtung zur kombinierten Bestimmung von Werten einer Geschwindigkeit und einer Bildaufnahme aus einem sich bewegenden Fahrzeug.

Erfindungsgemäß wird also vorgeschlagen, eine Bilderfassung über eine Aufnahme mittels einer an Bord befindlichen Videokamera vorzunehmen, welche den Bereich vor dem Fahrzeug aufnimmt.

Erfindungsgemäß wird nun die Geschwindigkeit mit Hilfe eines GPS-Empfängers im Fahrzeug ermittelt.

Um eine solche über GPS ermittelte Geschwindigkeit in einem System zur Ermittlung der Geschwindigkeiten eines Fahrzeugs benutzen zu können, ist es wichtig, aber jetzt erfindungsgemäß auch möglich, diese in ihrer Genauigkeit bewerten zu können, um die Messung gegebenenfalls verwerfen zu können.

Darüber hinaus wird es auch möglich, die so gemessene Geschwindigkeit des Fahrzeugs zeitlich, also einem bestimmten Zeitpunkt, zuzuordnen und sie beispielsweise in die gleichzeitig aufgenommenen Videoaufzeichnungen einzublenden. An sich wäre hier der zeitliche Versatz ein großes Problem, da die angezeigten Geschwindigkeiten nicht notwendig mit dem Videobild übereinstimmen. Auch kann aufgrund der oben erwähnten endlichen Zeit für die Bilderfassung die Zeit nicht zu einem definierten Zeitpunkt der Bilderfassung erfolgen. Die Bilderfassung erfolgt auch bei der Erfindung früher als die Ermittlung der GPS-Geschwindigkeit.

Als Lösung dieses Teilproblems wird jedoch erfindungsgemäß parallel zur Ermittlung der Geschwindigkeit aus dem GPS-Empfänger auch die Beschleunigung in Fahrtrichtung bestimmt. Eine erste Alternative dabei ist es, aus dem zeitlichen Verlauf der Beschleunigung und den Informationen des GPS-Signals nun die zeitliche Verzögerung zu berechnen. Eine zweite Alternative besteht darin, die Verzögerung einmalig für das GPS System zu bestimmen und dann als konstant anzunehmen und entsprechend zu verwenden. Durch Kenntnis dieser Verzögerung wird die Möglichkeit eröffnet, diesen zeitlichen Versatz zu kompensieren. Für eine solche Kompensation können die aufgenommenen Videobilder in einem Speicher zwischengespeichert werden. Dieser Speicher wird dann nach dem Prinzip First in First out ein digitales Laufzeitglied der entsprechenden Länge verwendet. Hierfür kann etwa ein Ringspeicher eingesetzt werden.

Liegt nun auch das GPS-Geschwindigkeitssignal vor, etwa einige Bruchteile von Sekunden später, so können die ermittelten Geschwindigkeiten dann zeitgerecht in das Bild eingeblendet werden, das durch die Kompensation errechnet wurde. Das Bild erhält quasi einen Zeitstempel mit einer korrekten Uhrzeit und der korrekten, für diesen Zeitpunkt bestimmten Geschwindigkeit. Die Ermittlung der Geschwindigkeit über zwei vollkommen unabhängige Wege lässt sehr genau erkennen, ob eine etwa vorhandene Abweichung nun noch tolerierbar ist oder nicht. Dafür kann ein Toleranzwert ausgewählt werden. Dieser Toleranzwert kann auch abhängig von unterschiedlichen Kriterien gewählt werden, etwa von der Höhe der Geschwindigkeit oder auch einer eingeschätzten Genauigkeit der beiden einzelnen Grundlagen. So kann die Zahl der Satelliten berücksichtigt werden, die das GPS-Signal ergeben haben, denn mit der Zahl der berücksichtigten Satelliten steigt auch die Zuverlässigkeit der Ortsbestimmung aus den GPS-Daten, die ihrerseits eine Grundlage der Geschwindigkeitsbestimmung dieses einen Wertes gewesen ist.

Diese Überlegungen werden im Weiteren noch detaillierter erörtert werden.

Als alternative Möglichkeit einer zeitlichen Kompensation besteht auch die Möglichkeit, die aktuelle Geschwindigkeit aus dem letzten gültigen Wert für die Geschwindigkeit gemäß dem GPS zuzüglich der bis dahin aufgetretenen Beschleunigungen nach dem Schema v (t) = ∫(a(t))+v_{gps,} durch Integration also, zu berechnen.

Dies bietet insbesondere den Vorteil, dass bei ausreichend hoher Abtastrate der Beschleunigungswerte (Vielfaches der Bildfrequenz) zu jedem Bild die zugehörige Geschwindigkeit berechnet werden kann, auch wenn die GPS Geschwindigkeit nicht in der passenden (meist niedrigeren) Abtastrate vorliegt.

Die reine Berechnung der Geschwindigkeit aus den Beschleunigungsdaten durch Integration über einen größeren Zeitraum ist nicht bevorzugt, da durch die Integration der Geschwindigkeitswert mit niedriger Frequenz wegdriftet.

Liegen die Beschleunigungswerte in hinreichend zeitlicher Auflösung vor, beziehungsweise liegen die Beschleunigungswerte passend und ungefähr zeitlich gleichzeitig zur Bilderfassung vor, so kann der passende Geschwindigkeitswert nach der gleichen Methode berechnet werden.

Um nun die Genauigkeit eines Geschwindigkeitswertes ermittelt mit Hilfe des GPS zu verifizieren, kann aus den Geschwindigkeitswerten die Beschleunigung ermittelt werden. Die auf diese Weise ermittelte Beschleunigung wird nun mit den Beschleunigungswerten aus dem Sensor verglichen. Wird dabei eine bestimmte, festgesetzte Abweichung erkannt oder überschritten, so wird die Messung verworfen. Messungen, die nicht hinreichend sicher korrekt sind, werden also als solche erkannt und können nicht zu irrtümlichen Beurteilungen einer Situation herangezogen werden.

Der oben beschriebenen Vorgang, dass nämlich die Geschwindigkeit aus den Beschleunigungswerten und GPS berechnet und anschließend mit weiteren GPS Geschwindigkeiten verglichen wird kann auch wie folgt beschrieben vorteilhaft in einer Regelschleife abgebildet werden. Zur Genauigkeitsabschätzung kann dann die Regelgröße verwendet werden.

Aus der letzten bekannten Geschwindigkeit (verzögerte GPS Geschwindigkeit) wird durch Summation der Beschleunigung die aktuelle Geschwindigkeit berechnet. Liegt nun eine neue GPS Geschwindigkeit vor so wird diese mit der für diesen Zeitpunkt errechneten verglichen. Je nach Abweichung wird dann der Offset des Beschleunigungswertes (oder aber auch der Drehwinkel in der Drehmatrix zur Anpassung der Ausrichtung im Fahrzeug) entsprechend verändert. Dies erzeugt ein Verhalten wie ein Hochpass mit sehr niedriger Grenzfrequenz wodurch die Drifterscheinungen eleminiert werden. Die Regelabweichung gibt hierbei ein Maß für die Genauigkeit der GPS Geschwindigkeit an.

Zur Feststellung der Abweichung der Genauigkeit der GPS-Geschwindigkeit können auch aus dem Signal des GPS verschiedene Parameter herangezogen werden, beispielsweise die Anzahl der Satelliten, von denen die entsprechenden Signalinformationen empfangen werden konnten. Auch das Signal-/Rausch-Verhältnis kann herangezogen werden. Aus diesen Parametern kann dann auf die Genauigkeit der GPS-Messung geschlossen werden. Dieser Zusammenhang ist somit für ein entsprechendes GPS System empirisch ermittelt.

Das System kann auf diese Weise einen maximalen Fehler der Geschwindigkeitsmessung von 5 km/h (alternativ 3 km/h) bei einer gemessenen Geschwindigkeit von bis zu 100 km/h sicherstellen. Bei Geschwindigkeiten oberhalb von 100 km/h wäre der maximale Fehler 5 % (alternativ 3 %).

Der erfindungsgemäße Beschleunigungssensor ist vorteilhaft als 3-achsiger Sensor ausgelegt, um die Beschleunigung in drei Koordinaten ermitteln zu können. Die Ausrichtung des Sensors zum Fahrzeug ist dabei durch den Einbau des Gerätes in das Fahrzeug bestimmt und ist zunächst meist unbekannt. Da nach unten stets die Schwerkraft als konstanter Beschleunigungswert gemessen wird kann hieraus die Ausrichtung im Fahrzeug errechnet werden, eventuell muss die Beschleunigung in Fahrtrichtung des Fahrzeugs ihrer Richtung nach berücksichtigt werden). Ist diese bekannt werden die Beschleunigungswerte mit Hilfe einer Drehmatrix auf das Fahrzeugkoordinatensystem umgerechnet, so dass man neben der Beschleunigung in Fahrtrichtung auch die Querbeschleunigung sowie die Beschleunigung senkrecht zur Fahrbahn erhält.

Diese Werte können auch dazu herangezogen werden Parameter des Fahrverhaltens festzustellen, indem die Beschleunigungswerte nicht nur in Fahrtrichtung sondern auch senkrecht dazu verwendet werden. In Kurvenfahrten tritt beispielsweise eine Querbeschleunigung auf, die umso höher ist je schneller die Kurve durchfahren wurde. Dies kann in diesem Zusammenhang vorteilhaft auch gleich zusätzlich zur Klassifizierung des Fahrerverhaltens (auch als Driver Behavior bezeichnet) verwendet werden. Auch kann die Schräglage bei Motorrädern ermittelt werden. Die Werte des Beschleunigungssensors können jetzt auch dazu verwendet werden, einen Unfall oder kritisches Fahren festzustellen und dann eine Videosequenz zu speichern oder zu übertragen.

Es ist auch möglich, den Geschwindigkeitswert bei festgestellten Abweichungen gleichwohl zu ermitteln und anders darzustellen bzw. auszublenden, um auf diese Weise klarzustellen, dass die angegebenen Werte den Toleranzen nicht mehr entsprechen. Auf diese Weise können zumindest diejenigen Teile einer Aufzeichnung verwendet werden, die auch ohne diese Angabe brauchbar sind.

Der Einbau derartiger Systeme wäre beispielsweise bei gewerblichen Kraftfahrzeugen wie beispielsweise in Omnibussen oder Lastkraftwagen, ebenso aber auch in Taxis oder Mietwagen eine sehr geeignete Maßnahme, die nicht nur Vorteilte im Hinblick auf größere Genauigkeit bietet, sondern auch bestehende, anfällige, unzuverlässige Systeme komplett ersetzt und somit Kosten spart. Durch die exakte Feststellung der Geschwindigkeit und ihre Zuordnung zu bestimmten Videoaufnahmen können herkömmliche Tachoscheiben problemlos ersetzt werden, da die mit der Erfindung erzielbaren Werte wesentlich detailliertere Informationen wiedergeben können.

Durch die Verbindung eines solchen Systems (Videoaufzeichnung mit eingeblendeter Geschwindigkeit, Messung von Beschleunigungswerten sowie die Klassifizierung nach bestimmten Parametern) mit einer Mobilfunk-Datenanbindung werden die Möglichkeiten für Sendung und Empfang auch dazu genutzt, die ermittelten Daten einschließlich der Daten für die Videoaufnahmen mittels Fernübertragung an eine zentrale Stelle zu übermitteln, wo sie in dort vorhandenen Speichern abgelegt werden können. Dies stellt insbesondere auch einen Schutz gegenüber Manipulation im Fahrzeug dar und ermöglicht auch weitere vorteilhafte Ausgestaltungen, z.B. Weiterverarbeitung, Schutz vor unbefugtem Zugriff auf die Daten, Verknüpfung mit Flottenmanagementsystem über eine API und einen sofortigen Echtzeitzugriff auf Daten, ohne ans Fahrzeug zu müssen.

So wird auf diese Weise auch eine Möglichkeit gegenüber einem Diebstahl des gesamten Fahrzeuges geschaffen, denn nach einem Diebstahl würde entweder die von dem unberechtigten Fahrzeugführer zurückgelegte Wegstrecke auf Video aufgezeichnet und an eine Zentrale übermittelt, was das Auffinden natürlich entsprechend vereinfacht, oder der unberechtigte Fahrzeugführer wäre gezwungen, die entsprechende Anlage außer Betrieb zu nehmen, was ebenfalls sofort zu einer entsprechenden Alarmierung noch während dieses Vorganges führen müsste.

Aber auch im Übrigen könnte sichergestellt werden, ob etwa in Mietwagen die gefahrene Strecke den Angaben auf dem Tachometer noch entspricht, was Manipulationen entgegenwirkt, und auch bei Unfällen wäre die Schuldfrage im Nachhinein wesentlich einfacher aufzuklären, wenn auch nur ein einzelnes der am Unfall beteiligten Fahrzeuge erfindungsgemäß ausgestattet wäre.

Im Folgenden wird eine Vorgehensweise an einem vereinfachten Ausführungsbeispiel näher beschrieben.

Ein Fahrzeug wird mit einer Videokamera und einem GPS-Empfänger ausgerüstet. Der GPS-Empfänger enthält gegenüber herkömmlichen Navigationsgeräten noch zusätzliche Funktionen.

Bekannt aus herkömmlichen Navigationsgeräten ist nur eine Ortsbestimmung. Die GPS-Satelliten geben jedoch in ihren Signalen zusätzlich ihre Frequenz an und auch die Geschwindigkeit, mit der sich aktuell ein Satellit im Weltall in eine bestimmte Richtung bewegt. Durch die Nutzung des Dopplereffektes im bewegten Fahrzeug kann nun festgestellt werden, mit welcher Geschwindigkeit sich relativ zu diesem Signal des Satelliten das Fahrzeug bewegt. Mit zwei oder besser noch drei oder vier Satelliten kann dieser Dopplereffekt gegenüber mehreren bewegten Satelliten genutzt und damit exakt die Richtung des Fahrzeuges und auch die Geschwindigkeit bestimmt werden, zusätzlich zu der weiterhin bestehenden Möglichkeit, die Geschwindigkeit aus den Ortskoordinaten durch Differenzbildung zu ermitteln.

Allerdings ist die Bestimmung dieser Geschwindigkeit aus dem Doppeleffekt nicht aktuell, sondern geringfügig verzögert. Das Gerät muss ja zunächst einmal die Satelliten finden, die Dopplereffekte feststellen und messen und daraus dann irgendetwas berechnen. Dafür wird eine endliche Zeit benötigt.

Nachdem daraus nun die Geschwindigkeit festgestellt worden ist, soll sie nun auf das entsprechende Bild des Videofilms "aufgedruckt" werden, natürlich in digitaler elektronischer Form. Dazu muss nun das ebenfalls verzögerte Bild herausgefunden werden, das genau zu dieser Geschwindigkeitsmessung passt.

Es ist also gewissermaßen so, dass man Fotos aufnimmt und diese nachträglich auf der Rückseite beschriftet, genau das alles aber natürlich elektronisch, wobei "nachträglich" etwa 1 Sekunde später ist.

Die Möglichkeit besteht darin, auch die Beschleunigung in Fahrtrichtung jederzeit festzuhalten und aus deren zeitlichen Verlauf dann zu ermitteln, zu welchem Zeitpunkt welche Geschwindigkeit des Fahrzeuges geherrscht hat und diese dann dem jeweiligen Bild zuzuordnen.

Die gesamten Aufnahmen mit den Daten werden natürlich nicht in dem Gerät im Fahrzeug behalten, sondern direkt vorzugsweise mit UMTS an einen Server geschickt. Bei einem Taxiunternehmen oder einer Mietwagenzentrale oder auch einer Spedition mit mehreren Lastkraftwagen kann dieser Server dann dort in der Zentrale sein. Die Zentrale weiß dann jederzeit, welches Fahrzeug wo ist, wie es gerade fährt, ob es möglicherweise steht, etc. Man kann auch feststellen, ob der Fahrer derjenige ist, der dieses Fahrzeug gerade berechtigt führt.

Erfindungsgemäß ausgerüstete Kraftfahrzeuge, die beispielsweise in Verkehrsunfälle verwickelt sind, bieten den Versicherungsgesellschaften, die hier etwa von Unfallgegnern in Anspruch genommen werden, eine sehr viel bessere und präzisere Möglichkeit, entweder diese Ansprüche der Unfallgegner als unberechtigt abzuwehren oder aber von vornherein keine unnötigen Rechtsstreitigkeiten zu führen. Das kann dazu führen, dass die Versicherungsgesellschaften ihren entsprechend ausgestatteten Versicherten einen Bonus oder eine herabgesetzte Prämie gewähren, wenn sie ihre Kraftfahrzeuge entsprechend ausstatten. Auf diese Weise hätten auch die Kraftfahrzeughalter einen Vorteil davon, der unter Umständen die Kosten für die Ausrüstung des Fahrzeuges mit den erfindungsgemäßen Komponenten aufwiegt.

## Patentansprüche

1. Verfahren zur Bestimmung von Werten einer Geschwindigkeit eines sich bewegenden Fahrzeugs, mit folgenden Schritten:
- Ermitteln von Werten einer Beschleunigung und von Werten einer Verzögerung des Fahrzeugs zu einem bestimmten Zeitpunkt mittels Beschleunigungssensoren,
- Ermitteln von Werten der Geschwindigkeit des Fahrzeugs zu einem bestimmten Zeitpunkt aus den Werten der Beschleunigung und den Werten der Verzögerung,
- Aufzeichnen der Werte der Geschwindigkeit des Fahrzeugs in einem Speichermedium,
- Aufnehmen von satellitengestützten Informationen aus dem Global Positioning System GPS für Navigationsgeräte im Fahrzeug,
- Aufnehmen eines Bildes mittels einer Videokamera,
**gekennzeichnet durch folgende Schritte:**
- Ermitteln von Werten der Geschwindigkeit des Fahrzeugs zum gleichen bestimmten Zeitpunkt aus den aufgenommenen Informationen des GPS,
- Ermitteln einer Abweichung der Werte der aus den Daten des GPS ermittelten Geschwindigkeit und der aus den Werten der Beschleunigung ermittelten Werte der Geschwindigkeit,
- Aufnehmen des Bildes eines Bereiches vor dem Fahrzeug mittels einer Videokamera und Aufzeichnen in einem Speichermedium, und
- für den Fall, dass die Abweichung der Werte der aus den Daten der GPS ermittelten Geschwindigkeit und der Werte der aus den Werten der Beschleunigung ermittelten Geschwindigkeit zum gleichen bestimmten Zeitpunkt eine vorgegebene, gegebenenfalls auch variable Toleranzschwelle nicht überschreitet, Zuordnen der Werte dieser ermittelten Geschwindigkeit zu der zum gleichen bestimmten Zeitpunkt erfolgten aufgezeichneten Bildaufnahme, andernfalls Verwerfen oder entsprechendes Kennzeichnen der ermittelten Werte und Bilder.

2. Verfahren nach Anspruch 1,
**dadurch gekennzeichnet,**
**dass** beim Ermitteln der Werte der Geschwindigkeit des Fahrzeugs zu einem bestimmten Zeitpunkt aus den aufgenommenen Informationen des GPS die Daten zum Dopplereffekt verwendet werden.

3. Verfahren nach Anspruch 1 oder 2,
**dadurch gekennzeichnet,**
**dass** eine Anbindung an ein Mobilfunknetz vorgesehen wird, und
**dass** die ermittelten Daten einschließlich der Bildaufnahmen mittels Fernübertragung an eine zentrale Stelle übermittelt werden.

4. Verfahren nach einem der vorstehenden Ansprüche,
**dadurch gekennzeichnet,**
**dass** die aktuelle Geschwindigkeit aus dem letzten gültigen Wert für die Geschwindigkeit ermittelt aus den Informationen des GPS zuzüglich der bis zum aktuellen Zeitpunkt aufgetretenen ermittelten Werte der Beschleunigung nach dem Schema v (t) = ∫(a(t))+v_{gps}, durch Integration erfolgt.

5. Vorrichtung zur Bestimmung von Werten einer Geschwindigkeit eines sich bewegenden Fahrzeugs,
- mit Beschleunigungssensoren zum Ermitteln von Werten der Beschleunigung und von Werten der Verzögerung des Fahrzeugs zu einem bestimmten Zeitpunkt,
- mit einer Datenverarbeitungseinrichtung, die dazu vorgesehen ist, die Geschwindigkeit des Fahrzeugs zum gleichen bestimmten Zeitpunkt aus den Werten der Beschleunigung und den Werten der Verzögerung zu ermitteln,
- mit einem Speichermedium, das an die Datenverarbeitungseinrichtung angeschlossen ist,
- mit einer Empfangseinrichtung ausgerüstet zum Aufnehmen von satellitengestützten Informationen aus dem Global Positioning System für Navigationsgeräte im Fahrzeug,
- mit einer Videokamera,
**dadurch gekennzeichnet,**
**dass**
- die Datenverarbeitungseinrichtung dazu vorgesehen ist, die Werte der Geschwindigkeit des Fahrzeugs zum gleichen bestimmten Zeitpunkt aus den aufgenommenen Daten des GPS zu ermitteln,
- die Datenverarbeitungseinrichtung dazu vorgesehen ist, reine Abweichung der Werte der aus den Informationen des GPS ermittelten Geschwindigkeit und den Werten der aus den Werten der Beschleunigung ermittelten Geschwindigkeit zu ermitteln und zu bewerten,
- die Videokamera an das Speichermedium angeschlossen ist, und
- die Datenverarbeitungseinrichtung so aufgebaut ist, dass für den Fall, dass die Abweichung der Werte der aus den Informationen des GPS ermittelten Geschwindigkeit und der Werte der aus den Werten der Beschleunigung ermittelten Geschwindigkeit zum gleichen bestimmten Zeitpunkt eine vorgegebene, gegebenenfalls auch variable Toleranzschwelle nicht überschreitet, der Werte dieser Geschwindigkeit zu der zum gleichen Zeitpunkt erfolgten aufgezeichneten Bildaufnahme zugeordnet wird, andernfalls die ermittelten Werte und Bilder verworfen oder entsprechend gekennzeichnet werden.

6. Vorrichtung nach Anspruch 5,
**dadurch gekennzeichnet,**
**dass** als Beschleunigungssensor ein dreiachsiger Sensor eingesetzt wird.

## Claims

1. Method for the determination of values of a speed of a moving vehicle, comprising the following steps:
- determining values of an acceleration and values of a deceleration of the vehicle at a particular point in time by means of acceleration sensors,
- determining values of the speed of the vehicle at a particular point in time from the values of the acceleration and the values of the deceleration,
- recording the values of the speed of the vehicle in a data storage medium,
- receiving satellite-aided information from the Global Positioning System (GPS) for navigation devices in the vehicle,
- receiving an image by means of a video camera,
**characterised by the following steps:**
- determining values of the speed of the vehicle at the same particular point in time from the recorded information of the GPS,
- determining a deviation of the values of the speed determined from the data of the GPS and the values of the speed determined from the values of the acceleration, and
- receiving the image of a region in front of the vehicle by means of a video camera and recording it in a storage medium,
- in the event that the deviation of the values of the speed determined from the data of the GPS and the values of the speed determined from the values of the acceleration at the same particular point in time does not exceed a predetermined, possibly also variable, tolerance threshold, associating the values of this determined speed with the image recording made at the same particular point in time, otherwise rejecting or suitably identifying the determined values and images.

2. Method according to claim 1,
**characterised in that,**
in determination of the values of the speed of the vehicle at a particular point in time from the recorded information of the GPS, the data concerning the Doppler effect are used.

3. Method according to claim 1 or 2,
**characterised in that,**
a connection to a mobile wireless network is provided, and **in that** the data determined including the image recordings are transferred by means of telecommunications to a central site.

4. Method according to one of the preceding claims,
**characterised in that,**
the current speed results, by integration, from the last applicable value for the speed determined from the information according to the GPS plus determined values of the acceleration occurring up to the current point in time according to the formula v(t) = ∫(a(t)) + v_{gps}.

5. Device for the determination of values of a speed of a moving vehicle,
- having acceleration sensors for determining values of the acceleration and values of the deceleration of the vehicle at a particular point in time,
- with a data processing device which is provided in order to determine the speed of the vehicle at the same particular point in time from the values of the acceleration and the values of the deceleration,
- having a storage medium, which is connected to the data processing device,
- having a receiving device equipped to receive satellite-aided information from the Global Positioning System (GPS) for navigation devices in the vehicle,
- having a video camera
**characterised in that**
- the data processing device is provided in order to determine the values of the speed of the vehicle at the same particular point in time from the received data of the GPS,
- the data processing device is provided in order to determine and evaluate a deviation of the values of the speed determined from the information of the GPS and the values of the speed determined from the values of the acceleration,
- the video camera is connected to the storage medium, and
- the data processing device is so constructed that, in the event that the deviation of the values of the speed determined from the information of the GPS and the values of the speed determined from the values of the acceleration at the same particular point in time does not exceed a predetermined, possibly also variable tolerance threshold, the value of this speed is associated with the image recording made at the same point in time, otherwise the determined values and images are rejected or suitably identified.

6. Device according to claim 5,
**characterised in that,**
a three-axis sensor is used as the acceleration sensor.

## Revendications

1. Procédé de détermination de valeurs d'une vitesse d'un véhicule en mouvement, avec les étapes suivantes :
- détermination de valeurs d'une accélération et de valeurs d'un ralentissement du véhicule à un moment donné au moyen de capteurs d'accélération,
- détermination de valeurs de la vitesse du véhicule à un moment donné à partir des valeurs de l'accélération et des valeurs du ralentissement,
- enregistrement des valeurs de la vitesse du véhicule dans un support de mémoire,
- acquisition d'informations assistées par satellites à partir du système de positionnement par satellites GPS pour appareils de navigation dans le véhicule,
- prise de vue au moyen d'une caméra vidéo,
**caractérisé par les étapes suivantes :**
- détermination de valeurs de la vitesse du véhicule au même moment donné à partir des informations acquises du GPS,
- détermination d'un écart des valeurs de la vitesse déterminée à partir des données du GPS et des valeurs de la vitesse déterminée à partir des valeurs de l'accélération,
- prise de vue d'une zone devant le véhicule au moyen d'une caméra vidéo et enregistrement dans un support de mémoire, et
- pour le cas où l'écart des valeurs de la vitesse déterminée à partir des données du GPS et des valeurs de la vitesse déterminée à partir des valeurs de l'accélération au même moment donné ne dépasse pas un seuil de tolérance prédéfini, le cas échéant également variable, affectation des valeurs de cette vitesse déterminée à la prise de vue enregistrée qui a eu lieu au même moment donné, dans le cas contraire, rejet ou caractérisation correspondante des valeurs et images déterminées.

2. Procédé selon la revendication 1,
**caractérisé en ce**
**que** lors de la détermination des valeurs de la vitesse du véhicule à un moment donné à partir des informations acquises du GPS, les données sont utilisées pour l'effet Doppler.

3. Procédé selon la revendication 1 ou 2,
**caractérisé en ce**
**qu'une** liaison à un réseau de téléphonie mobile est prévue, et
**que** les données déterminées y compris les prises de vue sont transmises à un poste central par télétransmission.

4. Procédé selon l'une quelconque des revendications précédentes,
**caractérisé en ce**
**que** la vitesse actuelle à partir de la dernière valeur valable pour la vitesse déterminée à partir des informations du GPS en plus des valeurs de l'accélération déterminées survenant jusqu'au moment actuel a lieu selon le schéma **v (t) = ∫(a(t))+v_{gps}** par intégration.

5. Dispositif de détermination de valeurs d'une vitesse d'un véhicule en mouvement,
- avec des capteurs d'accélération pour la détermination de valeurs de l'accélération et de valeurs du ralentissement du véhicule à un moment donné,
- avec un dispositif de traitement de données, qui est prévu pour déterminer la vitesse du véhicule au même moment donné à partir des valeurs de l'accélération et des valeurs du ralentissement,
- avec un support de mémoire, qui est raccordé au dispositif de traitement de données,
- avec un dispositif de réception équipé pour l'acquisition d'informations assistées par satellites à partir du système de positionnement par satellites GPS pour appareils de navigation dans le véhicule,
- avec une caméra vidéo,
**caractérisé en ce que**
- le dispositif de traitement de données est prévu pour déterminer les valeurs de la vitesse du véhicule au même moment donné à partir des données acquises du GPS,
- le dispositif de traitement de données est prévu pour déterminer et évaluer un écart des valeurs de la vitesse déterminée à partir des informations du GPS et des valeurs de la vitesse déterminée à partir des valeurs de l'accélération,
- la caméra vidéo est raccordée au support de mémoire, et
- le dispositif de traitement de données est construit de sorte que pour le cas où l'écart des valeurs de la vitesse déterminée à partir des informations du GPS et des valeurs de la vitesse déterminée à partir des valeurs de l'accélération au même moment donné ne dépasse pas un seuil de tolérance prédéfini, le cas échéant également variable, des valeurs de cette vitesse sont affectées à la prise de vue enregistrée qui a eu lieu au même moment donné, dans le cas contraire, les valeurs et images déterminées sont rejetées ou caractérisées en conséquence.

6. Dispositif selon la revendication 5,
**caractérisé en ce**
**qu'un** capteur à trois axes est employé en tant que capteur d'accélération.
